(19) 

Europäisches
Patentamt
European
Patent Office
Office européen
des brevets

(11) **EP 1 876 694 A1**

(12) **EUROPEAN PATENT APPLICATION**

(43) Date of publication:
**09.01.2008 Bulletin 2008/02**

(51) Int Cl.:
***H02M 3/156*** *(2006.01)*

(21) Application number: **06013764.3**

(22) Date of filing: **03.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **SIEMENS AKTIENGESELLSCHAFT 80333 München (DE)**

(72) Inventor: **Ming, Dan Chia Wei 570126 Singapore (SG)**

(54) **Booster circuit**

(57)  A circuit comprises a single inductor (L), a capacitor, a switch (SW) and a control circuit (CONTR). The inductor (L) is coupled with an input (IN) and with a first diode (D1). The first diode (D1) is coupled with an output (OUT). The capacitor is coupled with the first diode (D1) and with a reference potential (GND). The switch (SW) is coupled with the inductor (L) and the first diode (D1) and with the reference potential (GND). The control circuit controls the switching of the switch (SW) dependent on an output voltage of the circuit. An inductance of the inductor (L) and a capacitance of the capacitor are selected such that constraints for both transient filtering operation and voltage boosting operation are met.

## FIG 1

EP 1 876 694 A1

**Description**

The invention relates to a circuit providing transient filtering operation to suppress voltage or current transients and providing voltage boosting operation to boost an insufficient input voltage to a desired output voltage. The invention particularly relates to a circuit for application in an automobile and that is connected to a battery of the automobile for providing battery line filtering and a stable output voltage for other circuits.

The voltage of a battery in an automobile is subject to sudden breaks and transient changes. These sudden breaks or transient changes occur due to an inductive kickback of a generator or alternator of the automobile or due to large surge currents demanded by the engine or the alternator during operation of the cranking motor of the automobile. These transients, particularly positive transients, and breaks or dips in the battery voltage can cause problems in other circuits supplied with electrical energy by the battery. There is a need to protect these other circuits from harmful transients of the battery voltage and for enabling continued operation of these other circuits during low voltage conditions.

The object of the invention is to provide a circuit for transient filtering operation and voltage boosting operation that is simple and inexpensive.

The object of the invention is achieved by the features of the independent claim. Preferred embodiments of the invention are characterized in the dependent claims.

According to the invention, a circuit is provided comprising a single inductor, a capacitor, a switch and a control circuit. The inductor comprises a first and a second terminal. The inductor is electrically coupled via its first terminal with an input of the circuit and via its second terminal with the first terminal of a first diode. The first diode is electrically coupled via a second terminal with an output of the circuit. The capacitor comprises a first terminal and a second terminal. The capacitor is electrically coupled via its first terminal with the second terminal of the first diode and via its second terminal with a reference potential. The switch comprises a control input, a first and a second terminal. The switch is electrically coupled via its first terminal with the second terminal of the inductor and the first terminal of the first diode and via its second terminal with the reference potential. The switch couples its first and its second terminal when the switch is switched on and electrically decouples them otherwise dependent on a control signal provided on its control input. The control circuit provides the control signal and is electrically coupled with the output of the circuit and with the control input of the switch. The control circuit controls the switching of the switch dependent on an output voltage between the output of the circuit and the reference potential. An inductance of the inductor and a capacitance of the capacitor are selected such that constraints for both transient filtering operation and voltage boosting operation are met.

The advantage is that only a single inductor and a single capacitor are needed to perform both functions, that is transient filtering, that is also known as line filtering, and voltage boosting. The circuit therefore has the functionality of a voltage booster, that is also known as boost-converter or step-up converter, when the switch is operated. The circuit has further the functionality of the transient filter or line filter, particularly when the switch is switched off and is not operated. Because only a single inductor and a single capacitor are needed, the circuit is simple and inexpensive. The calculation of the inductance and the capacitance must be performed considering both the constraints applying to the inductor and the capacitor being used as the transient filter and the constraints applying to the inductor and the capacitor being used in a voltage boosting topology.

A further advantage is that the capacitance of the capacitor can be chosen rather large compared to a circuit that only provides the voltage boosting functionality. The capacitance of the capacitor can then be large enough for accumulating enough energy to allow for high output currents for a short duration without the danger of a breakdown of the output voltage. The circuit therefore can also be applied as a power supply for high power devices, for example power amplifiers. Preferably, the capacitance of the capacitor is greater than 1000 $\mu$F. It is even further preferable that the capacitance of the capacitor is greater than 3000 $\mu$F.

According to a preferred embodiment, the constraints are such that the selection of the inductance of the inductor depends on a predetermined resonance frequency for the transient filtering operation and a predetermined switching frequency and a predetermined duty cycle of the control signal for the voltage boosting operation. By this, the inductance of the inductor is selected taking into account the requirements according to a specific application the circuit is designed for. Further, the predetermined resonance frequency, the predetermined switching frequency and/or the predetermined duty cycle can be adjusted if necessary to allow for an appropriate inductance of the inductor and to meet the requirements. Particularly, the predetermined resonance frequency represents a predetermined cutoff frequency or predetermined critical frequency of a low pass filter. The low pass filter performs the transient filtering by reducing the magnitude of unwanted frequencies above the predetermined resonance frequency.

According to a further preferred embodiment, the constraints are such that the selection of the capacitance of the capacitor depends on a predetermined resonance frequency for the transient filtering operation. The selection of the capacitor depends on a predetermined voltage ripple of the output voltage and on a predetermined current ripple of an output current for the voltage boosting operation. By this, the capacitor is selected taking into account the requirements according to a specific application the circuit is designed for. Voltage ripple of the output voltage and current ripple of the output current may influence the other circuits coupled to the output of the circuit and may cause problems if the requirements are not met. The predetermined voltage ripple and the predetermined current ripple therefore are defined dependent on the requirements of the other circuits. The capacitor can thus be chosen appropriately to meet these requirements.

According to a further preferred embodiment, the control circuit is electrically coupled with the input of the circuit. The switching of the switch is activated when an input voltage between the input of the circuit and the reference potential is lower than a predetermined first input voltage threshold and the switch is switched off when the input voltage is greater than a predetermined second input voltage threshold. Particularly, the first and the second input voltage thresholds can be equal. The advantage is that the voltage booster is only active when the input voltage is too low to provide a predetermined minimum output voltage. When the input voltage is high enough to provide the predetermined minimum output voltage, the voltage boosting operation is no longer needed and the inductor and the capacitor act as the line filter.

According to a further preferred embodiment, the circuit comprises a reverse-biased second diode electrically arranged in parallel to the switch. The advantage is that the second diode can be used to allow for a high short circuit current for setting off a fuse located in an input line that is connected to the input of the circuit to protect the circuit from damage when the input voltage is erroneously reversed. Particularly, the circuit itself and other circuits connected to the output of the circuit are protected from damage when a positive and a negative terminal of a battery in the automobile are wrongly connected to the circuit.

A further advantage is that the second diode allows for a small reverse current dependent on the voltage drop over the second diode. The reverse current increases when a positive transient occurs and thus raises the voltage drop over the second diode. The reverse current thereby reduces and thus clamps the amount of energy of the transient that is transferred to the capacitor. The capacitor can thus be designed for buffering less energy and the capacitance can be chosen smaller. The capacitor can thus be less expensive. The other circuits supplied with energy by the circuit are reliably protected from transients and thus from damage.

In this respect, it is advantageous if the switch is implemented as a discrete field effect transistor comprising the second diode. The advantage is that this is simple and no extra diode as a separate element is needed. The circuit can thus be particularly inexpensive. Additionally, the second diode of the discrete field effect transistor can conduct a high short circuit current and allows for a comparatively high reverse current in comparison to a field effect transistor in an integrated circuit.

The invention and its embodiments will be more fully appreciated by reference to the following detailed description of presently preferred but nonetheless illustrative embodiments in accordance with the present invention when taken in conjunction the accompanying drawings.

The figures are illustrating:

FIG. 1 a simplified block diagram of the circuit and

FIG. 2 a block diagram of the circuit.

Elements of equal construction or function are provided with the same reference signs in all figures.

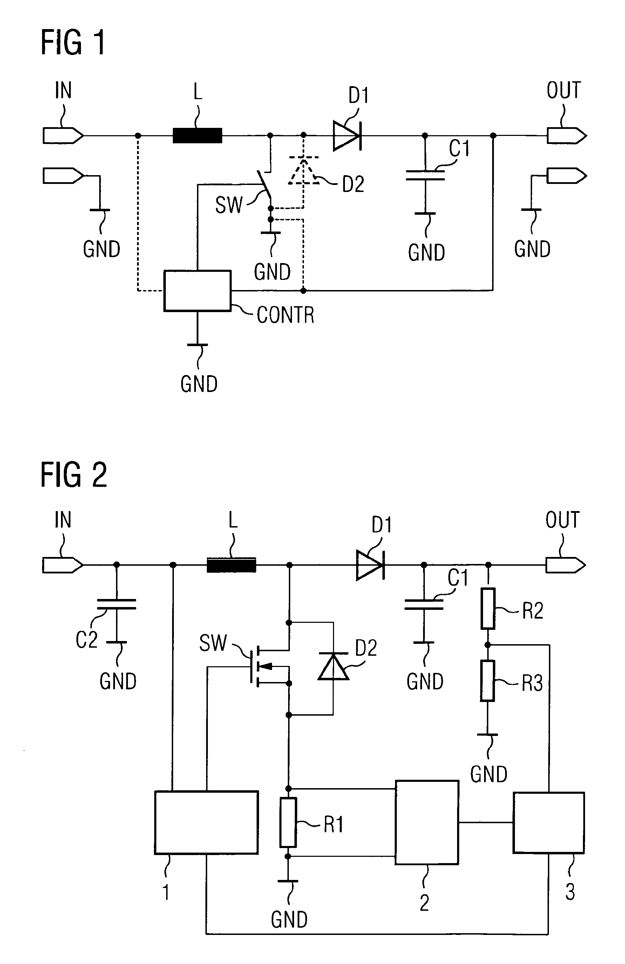

FIG. 1 shows a simplified block diagram of a circuit comprising a single inductor L, a first diode D1, a first capacitor C1, a switch SW and a control circuit CONTR. The inductor L is coupled via its first terminal to an input IN and with its second terminal to a first terminal of the first diode D1. The first terminal of the first diode D1 represents the anode of the first diode D1. The input IN of the circuit can be coupled via an input line to an electrical power source, particularly to a battery, e.g. to a battery in an automobile. For example, an input voltage between the input IN of the circuit and a reference potential GND in normal operation amounts to about 14.4 V.

The switch SW is coupled via its first terminal to the second terminal of the inductor L and the first terminal of the diode D1 and via its second terminal to a reference potential GND. The first capacitor C1 is coupled via its first terminal to a second terminal of the diode D1 and via its second terminal to the reference potential GND. The second terminal of the diode D1 and the first terminal of the first capacitor C1 are coupled to an output OUT of the circuit. The output OUT can be coupled via an output line to other circuits, e.g. to a power supply that regulates voltages or currents to other devices or to a power supply of an amplifier, particularly an audio amplifier, or to further devices, e.g. as a main power supply of a compact disc changer. Electrically arranged in parallel to the switch SW is a second diode D2 that is coupled via its cathode to the second terminal of the inductor L and the first terminal of the first diode D1 and via its anode to the reference potential GND. In normal operation the second diode D2 is therefore reverse-biased and essentially non-conducting. However, dependent on a magnitude of a voltage drop over the second diode D2 the second diode D2 allows for a small reverse current.

The control circuit is coupled to a control input of the switch SW and provides a control signal for switching the switch SW via its control input. The control circuit CONTR is further coupled with the output OUT of the circuit. The control circuit CONTR is designed to control the switching of the switch SW dependent on an output voltage between the output OUT of the circuit and the reference potential GND. Preferably, the output voltage is regulated by the control circuit CONTR to a predetermined minimum output voltage. The predetermined minimum output voltage, for example, amounts to about 10.5 V. Dependent on the application of the circuit, the predetermined minimum output voltage can also be higher or lower than 10.5 V. Preferably, the control signal is pulse width modulated and the output voltage is regulated by adapting a duty cycle of the control signal for switching the switch SW.

The control circuit CONTR can optionally also be coupled with the switch SW for measurement of a switching current flowing through the switch SW when the switch SW is switched on. By monitoring the switching current, the control circuit CONTR can switch off the switch SW when the switching current exceeds a predetermined maximum current threshold. The circuit can thus be protected from damage caused by overloading the circuit.

Preferably, the control circuit CONTR is further coupled with the input IN of the circuit. Preferably, the switching of the switch SW and thus the regulation of the output voltage is activated or enabled when the input voltage is lower than a predetermined first input voltage threshold to boost the insufficient input voltage to the desired predetermined minimum output voltage. The control circuit CONTR deactivates or disables the switching of the switch SW and switches off the switch SW when the input voltage is greater than a predetermined second input voltage threshold. For example, the predetermined first input voltage threshold amounts to about 6 V and the predetermined second input voltage threshold is preferably greater or equal to the predetermined first input voltage threshold.

FIG. 2 shows a more detailed block diagram of the circuit according to FIG. 1. The switch SW is preferably implemented as a field effect transistor. Preferably, the field effect transistor comprises a body diode or substrate diode representing the second diode D2. This second diode D2 can be utilized for protecting the circuit and the other circuits coupled to the output OUT of the circuit in case of a reverse battery condition. The reverse battery condition occurs when the positive terminal and the negative terminal of the power source, i.e. the battery, are erroneously swapped so that the negative terminal of the battery is then coupled with the input IN of the circuit and the positive terminal of the battery is coupled with the reference potential GND. The second diode D2 then allows for a short circuit current flow that is large enough to set off a fuse provided in the input line before the circuit and the other circuits are damaged. By utilizing the body diode or substrate diode as the second diode D2 a separate diode that would otherwise have to be provided to achieve this protection is not needed.

Preferably, the field effect transistor is implemented as a discrete field effect transistor. In this case, the discrete field effect transistor can be easily selected such that the second diode D2 can carry the large short circuit current long enough to set off the fuse without being damaged itself. The inductor L should also be designed to withstand the short circuit current flow without being damaged.

Further, due to its reverse current that increases with an increase in a voltage drop over the second diode D2, an amount of energy transferred to the first capacitor C1 is reduced or clamped. Thus, positive voltage transients of the input voltage are significantly reduced in the output voltage.

The control circuit CONTR comprises an input detection and driving circuit 1, a first comparator 2, and a second comparator 3 and a first, second and third resistor R1, R2, R3. The first resistor R1 is preferably provided electrically between the second terminal of the switch SW and the reference potential GND. The switching current that flows through the switch SW when the switch SW is switched on also flows through the first resistor R1. A voltage drop over the first resistor R1 representing a magnitude of the switching current is measured for comparison with the predetermined maximum current threshold by the first comparator 2. An output of the first comparator 2 is coupled with the input detection and driving circuit 1. In case the magnitude of the switching current exceeds the predetermined maximum current threshold, the input detection and driving circuit 1 preferably switches off the switch SW to protect the circuit from overloading. The measurement of the switching current can also be implemented differently, e.g. by selecting a current-sense field effect transistor as the switch SW. The first comparator 2 and the first resistor R1 are optional.

Electrically between the output OUT and the reference potential GND, a voltage divider comprising the second resistor R2 and the third resistor R3 is provided. A voltage drop over the third resistor R3 is compared by the second comparator 3 to a predetermined reference voltage for the output voltage. The predetermined reference voltage determines the predetermined minimum output voltage of the circuit. The second comparator 3 is coupled with the input detection and driving circuit 1.

Further, a second capacitor C2 can optionally be provided electrically between the input IN of the circuit and the reference potential GND. The second capacitor C2 reduces high frequency oscillation of the input voltage. A capacitance of the second capacitor C2, for example, amounts to about 100 nF.

To enable the circuit to provide both a transient filtering or line filtering functionality and a voltage boosting functionality the inductor L and the first capacitor C1 must be selected considering constraints for both the transient or line filter and for the voltage booster, boost-converter or step-up-converter. Here, transient filter and line filter as well as transient filtering and line filtering are used as synonyms. Additionally, voltage booster, boost-converter and step-up-converter are used as synonyms.

The transient filter is designed for preventing transients, particularly positive transients, transferred via the input line into the circuit from disturbing or damaging the other circuits coupled to the output OUT of the circuit. The transient may occur due to a so called load dump as an inductive kickback of a generator or alternator in the automobile after a sudden break in the battery voltage. The inductor L and the first capacitor C1 represent for this purpose a second order low pass filter with a predetermined resonance frequency. Typical values for an inductance of the inductor L and for a capacitance of the first capacitor C1 for transient filtering operation disregarding voltage boosting operation are 97 μH and 4700 μF, respectively, resulting in the predetermined resonance frequency of about 235 Hz. Preferably, the predetermined resonance frequency amounts to about 200 to 250 Hz. The predetermined resonance frequency can also be less than 200 Hz or greater than 250 Hz depending on the requirements. For example, the inductor L is rated for a current of 10 A and the first capacitor C1 is rated for a voltage of 25 V. The inductance and the capacitance are connected to each other via a first equation

$$\texttt{f\_res = 1 / (2 * π * √( L' * C')).}$$

In this first equation, f_res represents the predetermined resonance frequency, √ represents the square root function, L' represents the inductance of the inductor L and C' represents the capacitance of the first capacitor C1. The first equation represents a first constraint for implementing line filtering operation.

A second constraint to consider for implementing line filtering operation is that the capacitance of the first capacitor C1 must be high enough to hold the output voltage above or at the predetermined minimum output voltage when the input voltage drops below the predetermined first input voltage threshold until the first capacitor C1 is recharged through operation of the voltage booster. A chosen capacitance of the first capacitor C1 must thus be checked if it satisfies a second equation:

$$\texttt{ln(U\_charged / (U\_charged - U\_omin)) * C' * R\_load >= t\_dis.}$$

In this second equation, ln represents the natural logarithm, U_charged represents a predetermined maximum voltage of the first capacitor C1 when fully charged, e.g. equal to the battery voltage of about 14.4 V under normal conditions, U_omin represents the predetermined minimum output voltage, R_load represents a predetermined resistance of an electrical load coupled with the output OUT of the circuit, i.e. the input resistance of all the other circuits, and t_dis represents a predetermined discharge time span allowed until the first capacitor C1 must be recharged through operation of the voltage booster starting with the first capacitor C1 being charged to the predetermined maximum voltage of the first capacitor C1.

The voltage booster is designed for boosting a low input voltage to the desired predetermined minimum output voltage for allowing uninterrupted operation of the other circuits. The battery voltage and thus also the input voltage of the circuit may become too low when high currents are drawn from the battery, particularly during usage of the cranking motor for starting an engine of the automobile. The inductor L and the first capacitor C1 represent for this purpose a voltage boosting topology. Typical values for the inductance of the inductor L and for the capacitance of the first capacitor C1 for voltage boosting operation disregarding transient filtering operation are about 22 to 47 μH and about 100 to 330 μF, respectively. For example, the inductor L is rated for a current of 3 A and the first capacitor C1 is rated for a voltage of 25 V.

A third constraint to consider for voltage boosting operation is represented by a third equation:

$$\texttt{U\_ith * D / (f\_s * L') <= delta\_i\_max.}$$

This third equation considers the switch SW being switched on. For simplicity, voltage drops over the switch SW and the first resistor R1 are neglected. In this third equation U_ith represents the predetermined first input voltage threshold, D represents a predetermined duty cycle of the pulse width modulated control signal, f_s represents a predetermined switching frequency of the pulse width modulated control signal and delta_i_max represents a predetermined maximum switching current ripple. The predetermined maximum switching current ripple also represents a peak current through the inductor L. For example, for voltage boosting operation disregarding transient filtering operation, the switching frequency typically amounts to about 100 to 200 kHz, the duty cycle amounts to about 0.5 and the predetermined maximum switching current ripple amounts to about 3 to 5 A. The switching frequency, the duty cycle or the predetermined maximum switching current ripple can also be selected to be higher or lower depending on the application of the circuit.

A fourth constraint to consider for voltage boosting operation requires that an equivalent series resistance of the first capacitor C1 is less or equal than a ratio of a predetermined voltage ripple of the output voltage represented by delta_u_omax and a predetermined current ripple of the output current represented by delta_i_omax. This is represented by a fourth equation:

$$ESR\_C1 <= delta\_u\_omax / delta\_i\_omax.$$

In this fourth equation ESR_C1 represents the equivalent series resistance of the first capacitor C1. If the equivalent series resistance of the first capacitor C1 is greater than this ratio considering a fixed current ripple for the comparison, a voltage ripple of the output voltage will be greater than the predetermined voltage ripple of the output voltage. The predetermined voltage ripple of the output voltage and particularly the predetermined current ripple of the output current are determined depending on the requirements of the other circuits coupled with the output OUT.

Preferably, with a fifth constraint to consider for voltage boosting operation a steady state average output current of the circuit can be checked if it is as high as required. A predetermined steady state average output current of the circuit is represented by I_out and the steady state average output current of the circuit is given by a fifth equation:

$$I\_out <= 0.8 * D * (1 - D)^2 * U\_omin / (2 * f\_s * L').$$

The factor of 0.8 is chosen taking into account losses occurring in the circuit due to non-ideal components. This factor can also be chosen to be higher or lower dependent on the circuit design and the selected components. Typically, the steady state average output current of the circuit will be required to be greater or equal to a predetermined average output current.

Optionally, with a sixth constraint to consider for voltage boosting operation an initial rise time of the circuit can be checked if it satisfies the requirements. The initial rise time is at least required for the output voltage to become stable when starting up the voltage boosting circuit, i.e. beginning switching of the switch SW. The initial rise time is given by a sixth equation:

$$t\_rise = - L' * ln((U\_ith - delta\_i\_max * R\_sw) / U\_ith) / R\_sw.$$

In this sixth equation t_rise represents the initial rise time and R_sw is a predetermined resistance of the switch SW while the switch SW is switched on.

For selecting an appropriate combination of the inductance of the inductor L and the capacitance of the first capacitor C1 it is preferred to first select either the inductance or the capacitance and check it against the respective constraints. If one of the respective constraints is not met another inductance or capacitance, respectively, is selected and is checked against the respective constraints. This procedure is repeated until an appropriate inductance or capacitance, respectively, is found. Then, secondly, the corresponding capacitance or inductance, respectively, is calculated from the first equation and is checked against the respective constraints. When all constraints are met the appropriate combination of the inductance and the capacitance is found. The different predetermined parameters may have to be adjusted and set appropriately to be able to find the appropriate combination of the inductance and the capacitance. The consequences of such adjustments and the predetermined parameters to adjust can be easily derived from the equations.

In the following, a sample configuration of the circuit and particularly of the inductance of the inductor L and the capacitance of the first capacitor C1 is presented. The capacitance C' of the first capacitor C1 is selected to be 6800 μF. With the predetermined resonance frequency amounting to about 234 Hz the inductance L' of the inductor L amounts to approximately 68 μH using the first equation. By this, the first constraint is met.

Further, the predetermined maximum voltage U_charged of the first capacitor C1 is set to 10.5 V and the predetermined minimum output voltage U_omin is set to 7 V. The predetermined resistance R_load of the electrical load, i.e. the combined input resistance of all the other circuits coupled with the output OUT of the circuit, amounts to e.g. 12 Ohm. By this, also the predetermined steady state average output current I_out required is given as U_charged / R_load = 10.5 V / 12 Ohm = 0.875 A. By setting the predetermined duty cycle D to 0.35, which results in a maximum steady state average output current, and by setting the predetermined switching frequency f_s to 10 kHz the steady state average output current achieved by the circuit amounts to approximately 0.91 A using the fifth equation. The fifth constraint is therefore met. Further, by using the second equation, the discharge time span achieved by the circuit amounts to about 89.65 ms.

Further, as an example, the predetermined first input voltage threshold is set to 7 V. By using the third equation the maximum current ripple or the peak current through the inductor L amounts to about 3.6 A which is considered to meet the third constraint.

Further, as an example, the predetermined voltage ripple delta_u_omax of the output voltage is set to 500 mV and the predetermined current ripple delta_i_omax of the output current is set to 200 mA as required by the other circuits coupled with the output OUT of the circuit. Using the fourth equation the equivalent series resistance ESR_C1 must amount to less than 2.5 Ohm to meet the fourth constraint.

Using the sixth equation and selecting the predetermined resistance R_sw of the switch SW as 10 mOhm and the predetermined maximum switching current ripple delta_i_max as 3.6 A as calculated above the initial rise time t_ rise amounts to about 35.1 $\mu$s and can be checked if it meets the requirements. Preferably, the inductor L is rated for a current of 10 A and the first capacitor C1 is rated for a voltage of 25 V.

This sample configuration shows that for implementing both the transient filtering operation and the voltage boosting operation with the single inductor L and the first capacitor C1 the inductance of the inductor L and/or the capacitance of the first capacitor C1 must be selected differently than for either the transient filtering operation or the voltage boosting operation alone. Further, parameters of the circuit, such as the predetermined duty cycle or the predetermined switching frequency or the predetermined resonance frequency, must be predetermined appropriately to enable the circuit to meet the requirements. The advantage is that there is no need to implement the transient filter and the voltage booster independently with each comprising an expensive inductor and capacitor. The circuit can thus be less expensive and occupy less space.

Parasitic elements of components used for implementing the circuit are neglected in the above equations, with exceptions like the predetermined resistance R_sw of the swith SW or the equivalent series resistance ESR_C1 of the first capacitor C1, for simplicity and better understanding. Nonetheless it may be necessary to take further parasitic elements into account for specific components used, e.g. a resistance of the inductor L, or if required for a specific application of the circuit.

**Claims**

1. Circuit comprising

   - a single inductor (L) comprising a first and a second terminal, the inductor being electrically coupled via its first terminal with an input (IN) of the circuit and via its second terminal with a first terminal of a first diode (D1), the first diode (D1) being electrically coupled via a second terminal with an output (OUT) of the circuit,
   - a capacitor comprising a first terminal and a second terminal, the capacitor being electrically coupled via its first terminal with the second terminal of the first diode (D1) and via its second terminal with a reference potential (GND),
   - a switch (SW) comprising a control input, a first and a second terminal, the switch (SW) being electrically coupled via its first terminal with the second terminal of the inductor (L) and the first terminal of the first diode (D1) and via its second terminal with the reference potential (GND) and electrically coupling its first and its second terminal when the switch (SW) is switched on and electrically decoupling them otherwise dependent on a control signal provided at its control input, and
   - a control circuit (CONTR) providing the control signal and being electrically coupled with the output (OUT) of the circuit and with the control input of the switch (SW) and controlling the switching of the switch (SW) dependent on an output voltage between the output (OUT) of the circuit and the reference potential (GND) and an inductance of the inductor (L) and a capacitance of the capacitor being selected such that constraints for both transient filtering operation and voltage boosting operation are met.

2. Circuit according to claim 1 with the constraints being such that the selection of the inductance of the inductor (L) depending on a predetermined resonance frequency for the transient filtering operation and a predetermined switching frequency and a predetermined duty cycle of the control signal for the voltage boosting operation.

3. Circuit according to one of the previous claims with the constraints being such that the selection of the capacitance of the capacitor depending on a predetermined resonance frequency for the transient filtering operation and the selection of the capacitor depending on a predetermined voltage ripple of the output voltage and on a predetermined current ripple of an output current for the voltage boosting operation.

4. Circuit according to one of the previous claims with the control circuit (CONTR) being electrically coupled with the input (IN) of the circuit and the switching of the switch (SW) being activated when an input voltage between the input (IN) of the circuit and the reference potential (GND) is lower than a predetermined first input voltage threshold and the switch (SW) being switched off when the input voltage is greater than a predetermined second input voltage threshold.

5. Circuit according to one of the previous claims comprising a reversed-biased second diode (D2) electrically arranged in parallel to the switch (SW).

6. Circuit according to claim 5 with the switch (SW) being implemented as a discrete field effect transistor comprising the second diode (D2).

## FIG 1

## FIG 2

## EUROPEAN SEARCH REPORT

| | European Patent Office | | Application Number |
|---|---|---|---|
| | | EUROPEAN SEARCH REPORT | EP 06 01 3764 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2001/023488 A1 (BREUNIG VOLKER [DE] ET AL) 20 September 2001 (2001-09-20)<br>* page 1, paragraphs 2,3; figure 2B *<br>* page 2, paragraphs 25,26 *<br>----- | 1-6 | INV.<br>H02M3/156 |
| X | "MAX 1678: 1-Cell to 2-Cell, Low-Noise, High Efficiency, Step-Up DC-DC Converter"<br>INTERNET CITATION, [Online]<br>July 1998 (1998-07), XP002130025<br>Retrieved from the Internet:<br>URL:http://www.maxim-ic.com><br>[retrieved on 2000-02-08]<br>* the whole document *<br>----- | 1-6 | |
| X | EP 1 557 561 A (SHINDENGEN ELECTRIC MFG [JP]) 27 July 2005 (2005-07-27)<br>* abstract; figure 3 *<br>----- | 1-6 | |
| X | CHEN STANLEY: "Tiny step-up DC/DC converter design for portal single cell applications"<br>APPLICATION NOTE ANALOG INTEGRATIONS, March 2000 (2000-03), XP002967540<br>* the whole document *<br>----- | 1-6 | TECHNICAL FIELDS SEARCHED (IPC)<br><br>H02M |
| X | MOORE B D: "STEP-UP/STEP-DOWN CONVERTERS POWER SMALL PORTABLE SYSTEMS"<br>EDN ELECTRICAL DESIGN NEWS, REED BUSINESS INFORMATION, HIGHLANDS RANCH, CO, US,<br>vol. 39, no. 3,<br>3 February 1994 (1994-02-03), pages 79-82,84, XP000440998<br>ISSN: 0012-7515<br>* the whole document *<br>----- | 1-6 | |

The present search report has been drawn up for all claims

| Place of search | Date of completion of the search | Examiner |
|---|---|---|
| Munich | 4 December 2006 | Braccini, Roberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 876 694 A1**

## ANNEX TO THE EUROPEAN SEARCH REPORT
## ON EUROPEAN PATENT APPLICATION NO.

EP 06 01 3764

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2006

| Patent document cited in search report | | Publication date | Patent family member(s) | | Publication date |
|---|---|---|---|---|---|
| US 2001023488 | A1 | 20-09-2001 | AU | 731188 B1 | 29-03-2001 |
| | | | EP | 1132802 A1 | 12-09-2001 |
| EP 1557561 | A | 27-07-2005 | BR | 0312279 A | 26-04-2005 |
| | | | CN | 1675464 A | 28-09-2005 |
| | | | WO | 2004005705 A1 | 15-01-2004 |
| | | | JP | 2004036494 A | 05-02-2004 |

EPO FORM P0459

For more details about this annex : see Official Journal of the European Patent Office, No. 12/82